# EUROPÄISCHE PATENTSCHRIFT

(11) **EP 3 956 185 B1**
(45) Veröffentlichungstag und Bekanntmachung des Hinweises auf die Patenterteilung: **08.05.2024**
(21) Anmeldenummer: 20720387.8
(22) Anmeldetag: 14.04.2020
(51) Int. Cl.: B60S 1/52, B60S 1/04, B60S 1/40, B60S 1/34

(54) **WINDABWEISER FÜR EINE SCHEIBENWISCHANLAGE EINES KRAFTWAGENS**
WIND DEFLECTOR FOR A WINDSCREEN WIPER SYSTEM OF A MOTOR VEHICLE
DÉFLECTEUR D'AIR POUR UNE INSTALLATION D'ESSUIE-GLACE D'UN VÉHICULE À MOTEUR

(30) Priorität: 16.04.2019 DE 102019110084
(43) Veröffentlichungstag der Anmeldung: 23.02.2022
(73) Patentinhaber: Audi AG, 85045 Ingolstadt (DE); Dr. Ing. h.c. F. Porsche AG, 70435 Stuttgart (DE); A Raymond Et Cie, 38000 Grenoble (FR); Volkswagen Aktiengesellschaft, 38440 Wolfsburg (DE)
(72) Erfinder: HAEFNER, Stephan, 95473 Prebitz (DE); ACKERMANN, Frank, 38154 Koenigslutter am Elm (DE); AUCH, Sven, 70327 Stuttgart (DE); FEGER, Axel, 79540 Loerrach (DE); BODE, Karl, 79540 Loerrach (DE)
(74) Vertreter: Hofstetter, Schurack & Partner
(86) Internationale Anmeldenummer: PCT/EP2020/060451
(87) Internationale Veröffentlichungsnummer: WO 2020/212342

(56) Entgegenhaltungen:
- DE-A1- 19 914 122
- DE-A1-102013 212 195
- DE-A1-102016 012 099
- DE-U1- 8 716 154
- FR-A1- 2 747 977

## Beschreibung

Die Erfindung betrifft einen Windabweiser oder dergleichen Funktionselement für eine Scheibenwischanlage eines Kraftwagens gemäß dem Oberbegriff des Patentanspruchs 1.

Aus der DE 87 16 154 U1 ist bereits eine Anbauvorrichtung für einen Scheibenwischer bekannt, welche eine Windabweisfunktion aufweist. Die Anbauvorrichtung ist in einem Strangpressverfahren aus einem Kunststoff hergestellt und umfasst eine Aufnahme zum Befestigen einer Wischerstange eines Wischerarms der Scheibenwischanlage. Außerdem umfasst die Anbauvorrichtung eine Aufnahme für einen Schlauch einer Scheibenwaschanlage.

Die FR 2 747 977 A1 betrifft einen Scheibenwischer für ein Kraftfahrzeug mit einem aerodynamischen Deflektor und einer Vorrichtung zum Besprühen einer zu wischenden Scheibe mit Waschflüssigkeit.

Die DE 10 2016 012 099 A1 betrifft einen Scheibenwischer mit einem Wischerarm und einem Wischerblatt sowie eine an dem Wischerarm befestigte Abdeckung, in welcher ein oder mehrere Düsen für Scheibenwaschflüssigkeit und integriert sind. Die Zuführung der Scheibenwaschflüssigkeit kann dabei ebenfalls in der Abdeckung integriert sein. Weiterhin ist die Abdeckung derart ausgestaltet, dass das Wischerblatt, der Wischerarm und die Abdeckung voneinander gelöst werden können. Die Abdeckung verschließt dabei im Ruhezustand den Spalt zwischen Motorhaube und Windschutzscheibe und kann für den Betrieb über einen Mechanismus in einen kompakten Zustand überführt werden.

Aufgabe der vorliegenden Erfindung ist es, einen Windabweiser oder dergleichen Funktionselement der eingangs genannten Art zu schaffen, welcher besonders günstig am korrespondierenden Wischerarm der Scheibenwischanlage befestigt werden kann.

Diese Aufgabe wird erfindungsgemäß durch einen Windabweiser oder dergleichen Funktionselement mit den Merkmalen des Patentanspruchs 1 gelöst. Vorteilhafte Ausgestaltungen der Erfindung sind Gegenstand der abhängigen Ansprüche.

Der erfindungsgemäße Windabweiser oder dergleichen Funktionselement zeichnet sich zunächst dadurch aus, dass er eine Aufnahme zum Befestigen an einem Bauelement, insbesondere einer Wischerstange, eines Wischerarms der Scheibenwischanlage umfasst. Um hierbei einen Windabweiser zu schaffen, welcher einerseits besonders günstig an dem insbesondere als Wischerstange ausgebildeten Bauelement des Wischerarms befestigt werden kann, und welcher andererseits beispielsweise günstige aerodynamische Eigenschaften aufweist und überdies bei einem Kontakt mit der zu wischenden Scheibe keine Beschädigungen oder störende Geräusche verursacht, ist der Windabweiser oder dergleichen Funktionselement erfindungsgemäß zumindest teilweise aus einer elastischen Kunststoffkomponente gebildet. Eine derartige Kunststoffkomponente hat den Vorteil, dass beispielsweise die Aufnahme beziehungsweise der Aufnahmekanal zum Anordnen des Windabweisers an der Wischerstange in einem Längenbereich der elastischen Kunststoffkomponente gebildet werden kann, um somit beispielsweise die Wischerstange in einem Knickbereich zu ummanteln. Somit kann der Windabweiser beispielsweise in einfacher Weise auf die Wischerstange des Wischerarms aufgeschoben werden, auch wenn diese keinen geradlinigen Verlauf aufweist. An anderer Stelle kann die Aufnahme hingegen aus einer harten Kunststoffkomponente gebildet sein, um eine besonders sichere und feste Anordnung des Windabweisers an der Wischerstange oder einem sonstigen Bauelement des Wischerarms zu erhalten.

Weiterhin ist eine teilweise Ausgestaltung des Windabweisers aus einer elastischen Kunststoffkomponente vorteilhaft, um beispielsweise Beschädigungen oder störende Klopfgeräusche zu vermeiden, wenn der Windabweiser beispielsweise gegen die Scheibe schlägt. Dies kann beispielsweise bei entsprechenden Druckstößen, beim Abheben des Wischerblatts bzw. Wischerarms von der Scheibe oder bei Fahrten über eine unebene Fahrbahn passieren. Durch die elastische Kunststoffkomponente ist dabei beispielsweise eine Dämpfung möglich, sodass der auf der Scheibe auftreffende Windabweiser nicht zu den beschriebenen Nachteilen führt. Somit kann der Windabweiser andererseits auch sehr nahe an der korrespondierenden Scheibe angeordnet werden, was zu aerodynamischen Vorteilen führt.

Ferner ist der Windabweiser zumindest teilweise aus einer harten Kunststoffkomponente gebildet. Somit können diejenigen Bereiche, beispielsweise die Aufnahme beziehungsweise den Aufnahmekanal zur Befestigung des Windabweisers am Wischerarm, speziell aus der harten Kunststoffkomponente geschaffen werden, um eine besonders zuverlässige und steife Anordnung des Windabweisers an dem Wischerarm zu erhalten. Die weiche und elastische Kunststoffkomponente und die harte Kunststoffkomponente werden dabei beispielsweise im Rahmen eines Zweikomponenten-Spritzgussverfahrens oder im Rahmen eines ähnlichen Verfahrens eingesetzt, um den Windabweiser zu bilden, um in einfacher Weise einen Windabweiser zu schaffen, welcher die vorbeschriebenen Merkmale und Vorteile aufweist.

Ferner ist in den Windabweiser eine Scheibenreinigungseinrichtung integriert. Hierdurch lässt sich ein Windabweiser mit einer entsprechenden Doppelfunktion schaffen.

Ferner sind zumindest im Wesentlichen alle Flüssigkeit führenden Bauteile der Scheibenreinigungseinrichtung aus der harten Kunststoffkomponente gebildet. Somit kann eine Scheibenreinigungseinrichtung geschaffen werden, welche dicht ausgebildet ist und mit hoher Leistung entsprechende Scheibenreinigungsflüssigkeit zur zu reinigenden Scheibe geführt wird.

Ferner ist vorgesehen, dass eine Oberfläche des Windabweisers bezogen auf seine Einbauposition zumindest auf einer Sichtseite zumindest im Wesentlichen durch die elastische Kunststoffkomponente gebildet ist. Einerseits wird somit eine optisch vorteilhafte, einheitliche und aerodynamische Oberfläche geschaffen, welche andererseits beispielsweise bei entsprechenden Kollisionen des Windabweisers bzw. mit dem Windabweiser dafür sorgt, dass derartige Stöße oder dergleichen weich abgefangen werden.

In diesem Zusammenhang hat es sich als weiter vorteilhaft gezeigt, wenn die Scheibenreinigungseinrichtung zumindest im Wesentlichen vollständig in die elastische Kunststoffkomponente integriert ist. Somit ist die Scheibenreinigungseinrichtung besonders günstig und verborgen in die elastische Kunststoffkomponente integriert.

Weiterhin hat es sich als vorteilhaft gezeigt, wenn die Aufnahme zum Befestigen des Windabweisers an einem Bauelement des Wischerarms der Scheibenwischanlage vorzugsweise aus der harten Kunststoffkomponente gebildet ist. Hierdurch ergibt sich die besonders zuverlässige, stabile und steife Anordnung des Windabweisers am korrespondierenden Wischerarm.

Eine weitere vorteilhafte Ausführungsform der Erfindung sieht vor, dass die Aufnahme zum Befestigen des Windabweisers an einer Wischerstange des Wischerarms der Scheibenwischanlage ausgebildet ist. Hierdurch ergibt sich eine besonders einfache Ausgestaltung der gesamten Scheibenwischanlage.

Eine weiter vorteilhafte Ausführungsform der Erfindung sieht vor, dass eine Befestigungseinrichtung zur Sicherung des Windabweisers an dem Bauelement des Wischerarms der Scheibenwischanlage vorgesehen ist, welches aus der harten Kunststoffkomponente gebildet ist. Somit der Windabweiser auch gegen ein Bewegen entlang des Wischerarms besonders günstig und stabil gesichert.

Schließlich hat es sich als vorteilhaft gezeigt, wenn die elastische Kunststoffkomponente aus einem UV-beständigen Material gebildet ist, um somit über den Lebenszyklus des Kraftwagens erhalten zu bleiben.

Im Folgenden sind Ausführungsbeispiele der Erfindung beschrieben. Hierzu zeigt:

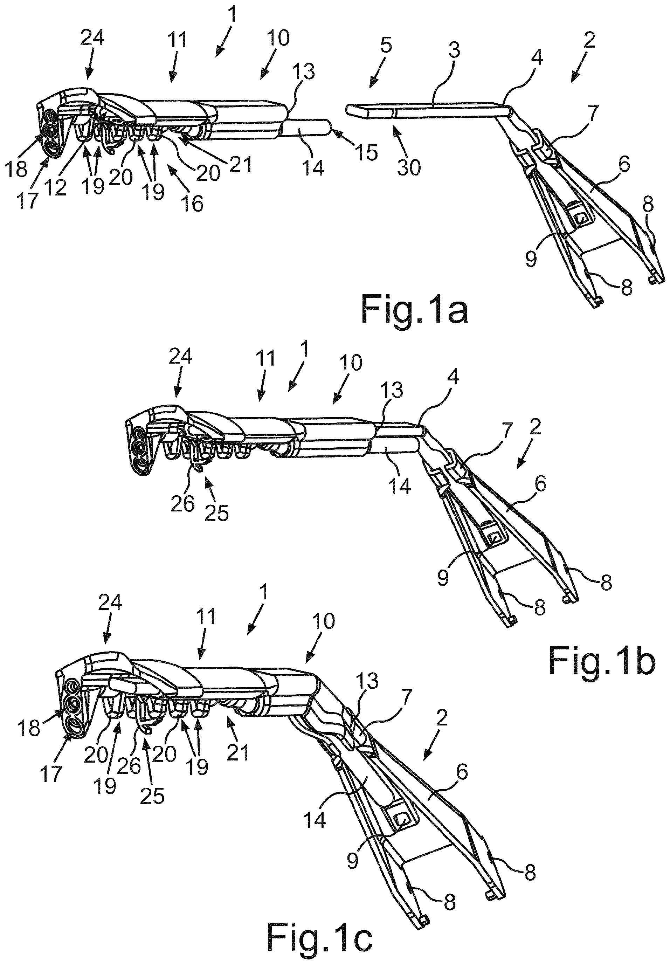

- Fig. 1a-1c: jeweilige Perspektivdarstellungen einer Montageabfolge eines Funktionselements, welches als Windabweiser ausgebildet ist und eine Scheibenreinigungseinrichtung umfasst, auf eine Wischerstange eines Wischerarms einer Scheibenwischanlage für einen Kraftwagen gemäß einer ersten Ausführungsform, wobei Fig. 1a das Funktionselement noch separat von der Wischerstange zeigt, Fig. 1b das Funktionselement in teilweise aufgesteckter Position an der Wischerstange zeigt, und Fig. 1c das vollständig auf der Wischerstange aufgesteckte Funktionselement darstellt;

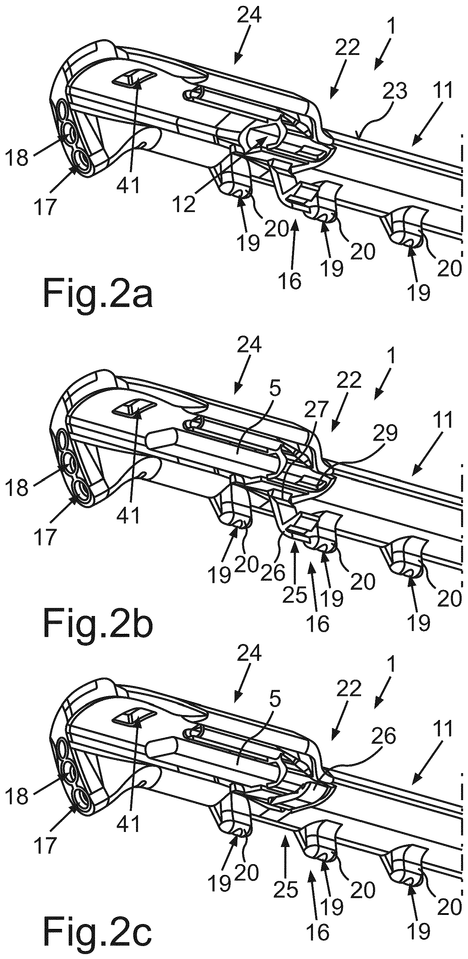

- Fig. 2a-2c: jeweilige ausschnittsweise Perspektivdarstellungen des Funktionselements der ersten Ausführungsform der Scheibenwischanlage, wobei Fig. 2a das Funktionselement vor dem Aufstecken auf die Wischerstange zeigt, Fig. 2b das Funktionselement bei vollständig aufgesteckter, jedoch noch nicht mittels einer Befestigungseinrichtung gesicherter Position zeigt, und Fig. 2c das anschließend mittels der Befestigungseinrichtung an der Wischerstange fixierte Funktionselement darstellt;

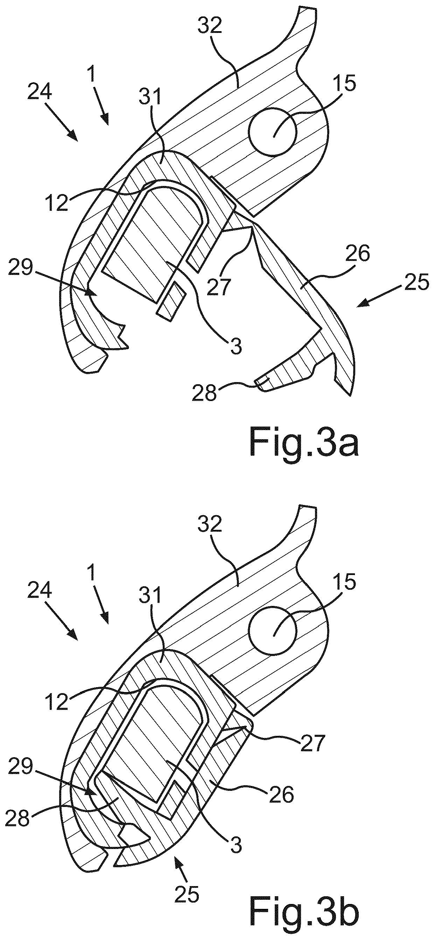

- Fig. 3a, 3b: jeweilige Schnittansichten durch das Funktionselement in seiner an der Wischerstange angeordneten Position, wobei Fig. 3a die Befestigungseinrichtung zum Fixieren des Funktionselements an der Wischerstange in geöffnetem Zustand und Fig. 3b die Befestigungseinrichtung in geschlossenem, das Funktionselement an der Wischerstange fixierenden Position dargestellt ist;

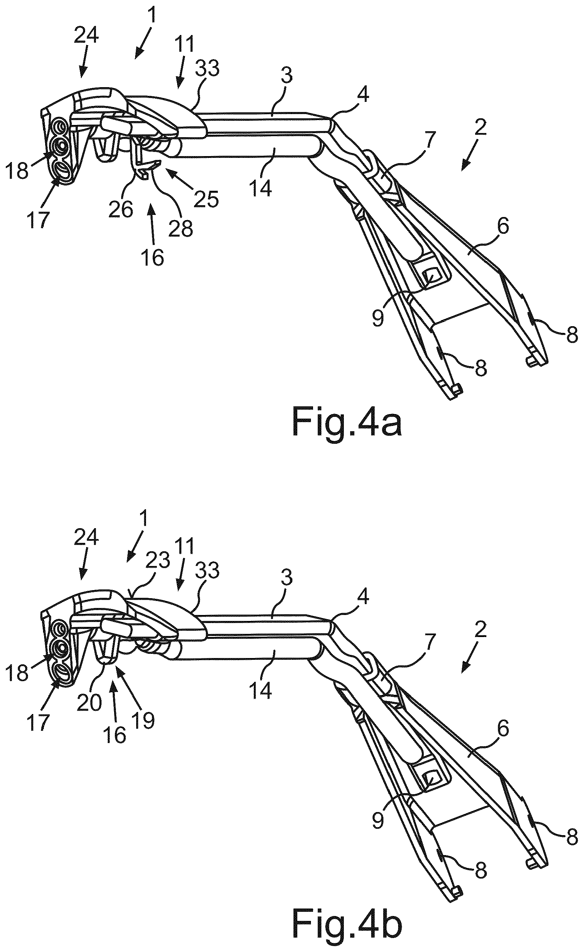

- Fig. 4a, 4b: jeweilige Perspektivansichten auf ein an der korrespondierenden Wischerstange befestigtes Funktionselement gemäß einer weiteren Ausführungsform, bei welcher das Funktionselement kürzer ausgebildet ist und sich demzufolge nicht bis an den Federkasten des Wischerarms erstreckt, wobei Fig. 4a das Funktionselement bei einer geöffneten Befestigungseinrichtung und Fig. 4b bei einer geschlossenen Befestigungseinrichtung zeigt;

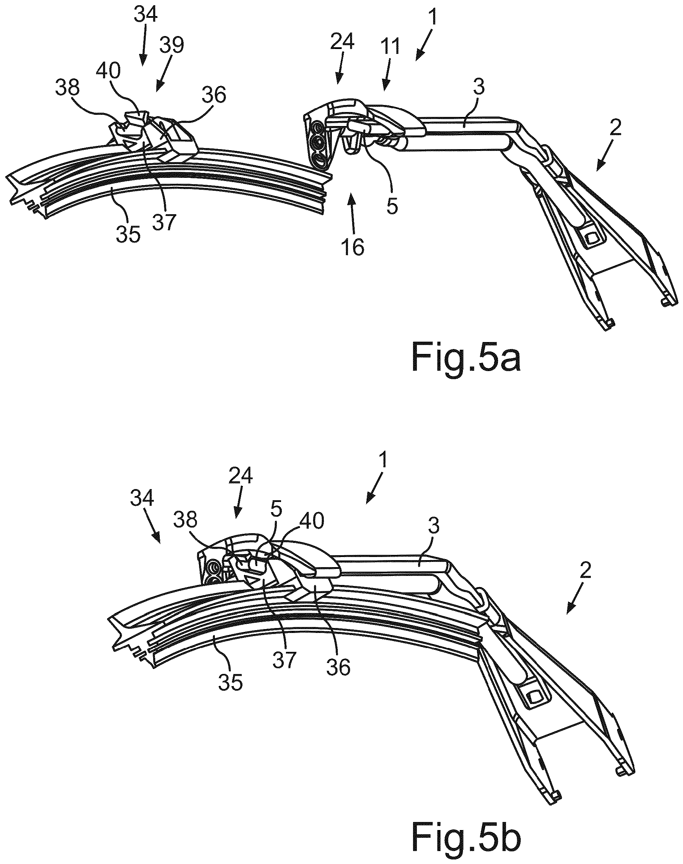

- Fig. 5a, 5b: jeweilige Perspektivansichten des Wischerarms mit dem daran montierten Funktionselement gemäß den Fig. 4a und 4b, wobei Fig. 5a ein Wischerblatt vor seiner Montage und Fig. 5b das Wischerblatt nach der Montage mittels eines Adapters zeigt, welcher unabhängig von dem Funktionselement am freien Ende der Wischerstange des Wischerarms angeordnet und fixiert ist.

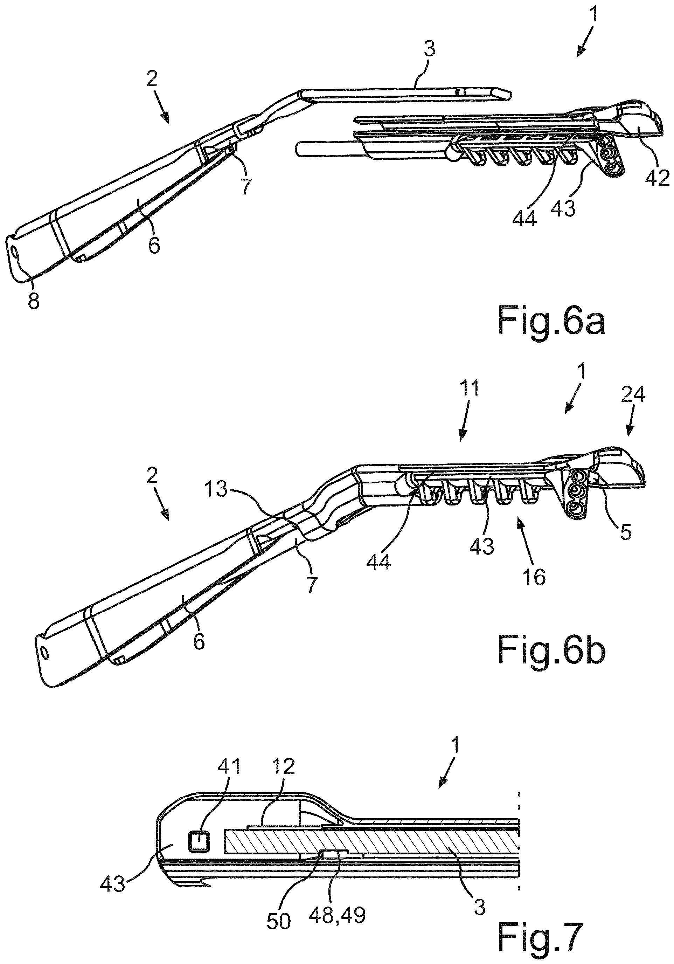

- Fig. 6a, 6b: jeweilige Perspektivansichten auf ein an der korrespondierenden Wischerstange befestigtes Funktionselement gemäß einer weiteren Ausführungsform, bei welcher das Funktionselement aus zwei Teilen gebildet ist, welche an einem Filmscharnier oder dergleichen miteinander verbunden sind und durch Zusammenklappen miteinander zu verbinden bzw. an der Wischerstange zu befestigen sind, wobei Fig. 6a das Funktionselement vor der Fixierung an der Wischerstange und Fig. 6b das Funktionselement nach der Fixierung an der Wischerstange zeigt;
- Fig. 7: eine ausschnittsweise Schnittansicht durch das Funktionselement sowie die zugehörige Wischerstange, an welcher das Funktionselement befestigt ist, entlang einer Schnittebene, welche sich in einer Trennebene zwischen den beiden Teilen des Funktionselements erstreckt, wobei insbesondere eine Befestigungseinrichtung erkennbar wird, mittels welcher das Funktionselement an der Wischerstange gesichert ist; und

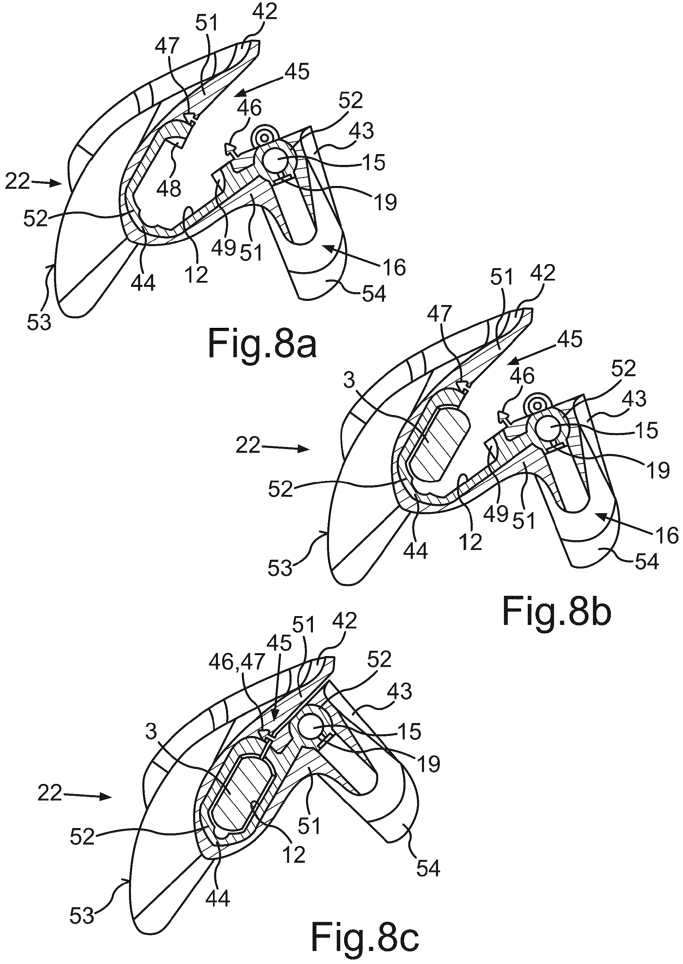

- Fig. 8a-8c: jeweilige Schnittansichten durch das Funktionselement gemäß den Figuren 6a bis 7, wobei Fig. 8a analog zu Fig. 6a die beiden Teile des Funktionselements in geöffnetem Zustand zeigt, Fig. 8b das Funktionselement mit den beiden Teilen in an der Wischerstange angeordneter, aber noch nicht geschlossener Position zeigt, und Fig. 8c die beiden Teile des Funktionselements nach der Befestigung an der Wischerstange darstellt.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

Die Figuren 1a, 1b und 1c zeigen in einer jeweiligen Perspektivansicht einen Montageablauf zur Anordnung und Fixierung eines im Weiteren noch näher erläuterten Funktionselements 1 an einem Wischerarm 2. Der Wischerarm 2 und das Funktionselement 1 sind hierbei in Fig. 1a zunächst explosionsartig getrennt dargestellt.

Hierbei ist insbesondere erkennbar, dass der Wischerarm 2 eine Wischerstange 3 umfasst, welche in einem Knickbereich 4 winkelig ausgebildet ist. Auf einer einem freien Ende 5 entgegengesetzten Seite ist die Wischerstange 3 mit einem Federkasten 6 fest verbunden, welcher einem Anschlussbereich 7 zumindest im Wesentlichen im Querschnitt rechteckförmig ausgebildet und auf die im Querschnitt zumindest im Wesentlichen ebenfalls rechteckförmige Wischerstange 3 aufgecrimpt ist. Der Federkasten 6 ist über Lageröffnungen 8 gelenkig mit einem nicht dargestellten Hebelelement der Scheibenwischanlage, welches gelegentlich auch als Befestigungsteil bezeichnet wird, verbunden, welches seinerseits mit einer zugehörigen Antriebswelle eines Antriebsmotors drehfest verbunden ist. Um die durch die Lagerzapfen 8 gebildete Achse ist der Wischerarm 2 gegenüber dem zugehörigen Hebelelement gegen die Federkraft eines Federelements verschwenkbar, welches seinerseits in eine Federaufnahme 9 am korrespondierenden Ende der Wischerstange 3 einhängbar ist, um beispielsweise in der Betriebsstellung den Wischerarm 2 bzw. ein zugehöriges Wischerblatt gegen die Oberfläche einer Frontscheibe zu drücken.

Das Funktionselement 1 weist einen ersten Teilbereich 10 und einen einteilig mit diesem ausgebildeten zweiten Teilbereich 11 auf, innerhalb welchen ein durchgängiger Aufnahmekanal 12 für die Wischerstange 3 vorgesehen ist. Der Aufnahmekanal 12 ist dabei im Querschnitt zumindest im Wesentlichen an den etwa rechteckförmigen Querschnitt der Wischerstange 3 angepasst, welche über ihren gesamten Verlauf einen zumindest im Wesentlichen einheitlichen Querschnitt aufweist. Demzufolge weist auch der Aufnahmekanal 12 über seine gesamte Länge innerhalb des Funktionselements 1 einen im Wesentlichen einheitlichen Querschnitt auf.

Wie im Weiteren in Zusammenschau mit den Figuren 1b und 1c erkennbar ist, ist das Funktionselement 1 demzufolge vom freien Ende 5 her auf die Wischerstange 3 aufsteckbar bzw. aufschiebbar, bis ein Ende 13 des ersten Teilbereichs 10 des Funktionselements 1 zumindest im Wesentlichen bündig an den Anschlussbereich 7 des Federkastens 6 anschließt. Damit ein Aufstecken des Funktionselements 1 auf die Wischerstange 3 bis zum Federkasten 6 erfolgen kann, ist das Funktionselement 1 im ersten Teilbereich 10 - ausgehend vom Ende 13 - zumindest über den Knickbereich 4 hinweg aus einem elastischen Material, beispielsweise einem entsprechenden Kunststoff, hergestellt. Durch dieses weichelastische Material ist es gegebenenfalls auch denkbar, dass der Anschlussbereich 7 des Federkastens 6 muffenartig vom Ende 13 des Teilbereichs 10 des Funktionselements 1 überragt wird.

Das Ende 13 des Teilbereichs 10 wird zudem überragt von einem Leitungsteil 14, über welchen das Funktionselement 1 auf im Weiteren noch näher beschriebene Weise mit einer Scheibenreinigungsflüssigkeit versorgt werden kann. Innerhalb des Leitungsteils 14 ist demzufolge wenigstens ein Versorgungskanal 15 für Scheibenreinigungsflüssigkeit ausgebildet, über welchen das Funktionselement 1 auf im Weiteren noch näher beschriebene Weise mit Scheibenreinigungsflüssigkeit versorgt werden kann. Dieser Versorgungskanal 15 erstreckt sich im Weiteren auch über den Teilbereich 10 sowie über den Teilbereich 11 des Funktionselements 1. Demzufolge ist in das Funktionselement 1 eine Scheibenreinigungseinrichtung 16 bzw. ein Teil von dieser ausgebildet, sodass es sich im vorliegenden Fall bei dem Wischerarm 2 um einen sogenannten Nasswischerarm handelt. Dies bedeutet, die mittels der Scheibenwischanlage zu reinigende Scheibe, insbesondere Frontscheibe des Kraftwagens, über Düsen mit Scheibenreinigungsflüssigkeit beaufschlagt werden kann, welche von dem Wischerarm 2 getragen sind. Das Ende des Leitungsteils 14 des Funktionselements 1 ist dabei über eine nicht weiter gezeigte Kanalanordnung mit einem der Scheibenreinigungsanlage für Scheibenreinigungsflüssigkeit nebst zugehöriger Pumpe verbunden. Üblicherweise ist diese im Frontraum bzw. Motorraum des Kraftwagens untergebracht. Wie insbesondere aus Fig. 1c erkennbar ist, verläuft das Leitungsteil 14 im vorliegenden Fall unterseitig der Wischerstange 3 bis in das Innere des Federkastens 6 weiter.

In Zusammenschau der Figuren 1a bis 1c ist des Weiteren erkennbar, dass das Aufschieben des Funktionselements 1 auf die Wischerstange 3 so weit erfolgt, dass diese - wie dies aus Fig. 1c in der endgültig montierten Position des Funktionselements 1 erkennbar ist - an einem freien Ende 5 über einen erheblichen Längenbereich aus dem Aufnahmekanal 12 herausragt. Dies bedeutet umgekehrt, dass das Funktionselement 1 mit den Teilbereichen 10, 11 über den Aufnahmekanal 12 mit einem vom freien Ende 5 der Wischerstange 3 beabstandeten Längenbereich der Wischerstange 3 verbunden ist.

Mit anderen Worten ragt das freie Ende 5 über den Teilbereich 11 des Funktionselements 1 hinaus beziehungsweise aus dem Aufnahmekanal 12 heraus.

Die in das Funktionselement 1 integrierte Scheibenreinigungseinrichtung 16 umfasst vorliegend ein Kanalsystem mit jeweiligen, in das Funktionselement 1 integrierten Kanälen, welche an diverse Düsen münden, über welche die zu reinigende bzw. zu wischende Scheibe bzw. das im Weiteren noch näher erläuterte zugehörige Wischerblatt mit Scheibenreinigungsflüssigkeit beaufschlagt werden können.

So umfasst die Scheibenreinigungseinrichtung 16 zunächst zwei Außenkreisdüsen 17, 18, über welche das Wischerblatt im Nahbereich seines Au-βenkreises, also demjenigen Bereich, in welchem das Wischerblatt den größten Radius seiner zu wischenden Fläche durchläuft, beaufschlagt wird. Die Außenkreisdüse 17 deckt dabei einen zu dem Funktionselement 1 näheren Bereich und die Außenkreisdüse 18 einen von dem Funktionselement 1 noch weiter entfernten Bereich nahe des Außenkreises des korrespondierenden Wischerblattes ab.

Außerdem umfasst die Scheibenreinigungseinrichtung 16 eine Mehrzahl von vorliegend fünf mittleren Düsen 19, welche sich allesamt zumindest im Wesentlichen in einer Reihe entlang der Erstreckungsrichtung des Funktionselements 1 erstrecken. Die jeweiligen Düsen 19 sind auf im Weiteren noch beschriebene Weise in jeweils zugehörigen, vom Funktionselement 1 bzw. vom Wischerarm 2 in Richtung der zu wischenden und zu reinigenden Scheibe abstehenden Höckern 20 untergebracht. Schließlich umfasst die Scheibenreinigungseinrichtung 16 wenigstens eine Innenkreisdüse 21, über welche das Wischerblatt des Wischerarms 2 im Bereich seines Innenkreises mit Reinigungsflüssigkeit versorgt wird, in welchem das Wischerblatt beim Wischvorgang seinen kürzesten Radius der korrespondierenden Wischfläche durchläuft. Alle Düsen 17, 18, 19 und 21 können dabei so eingestellt werden, dass diese bei einer Startbewegung, also im Falle einer Frontscheibe bei einer Aufwärtsbewegung des jeweiligen Wischerarms 2, die Reinigungsflüssigkeit in einem entsprechenden Abstand vor dem sich dahin bewegenden Wischerblatt auf die Scheibe, insbesondere die Frontscheibe, aufbringen. Gegebenenfalls kann auch das Wischerblatt mit der Scheibenreinigungsflüssigkeit unmittelbar beaufschlagt werden.

Neben der Integration der Scheibenreinigungseinrichtung 16 umfasst das Funktionselement 1 die weitere Funktion der Windabweisung. Demzufolge ist das Funktionselement 1 im vorliegenden Fall als Windabweiser 22 ausgebildet und umfasst auf der zumindest im Wesentlichen den Düsen 19 sowie der Wischerstange 3 abgewandten Vorder- bzw. Oberseite eine Windabweiskontur 23, um demzufolge ein besonders günstiges Überströmen der üblicherweise von vorne den jeweiligen Wischerarm 2 bzw. das korrespondierende Wischerblatt anströmende Luft zu ermöglichen.

Das vorliegende Funktionselement 1 ist also als Windabweiser 22 und zur Integration der Scheibenreinigungseinrichtung 16 ausgebildet. Als im Rahmen der Erfindung mitumfasst ist es jedoch zu betrachten, dass das Funktionselement 1 auch lediglich eine dieser beiden Funktionen wahrnehmen könnte.

Die Figuren 2a bis 2c zeigen in jeweiligen ausschnittsweisen und perspektivischen Unteransichten das Funktionselement 1 der in den Figuren 1a bis 1c beschriebenen Ausführungsform. Aus Fig. 2a ist dabei insbesondere der Aufnahmekanal für die Wischerstange 3 erkennbar, welche von einem dritten Teilbereich 24 des Funktionselements 1, welches mit den Teilbereichen 10 und 11 ebenfalls einteilig ausgebildet ist. Die Figuren 2b und 2c zeigen dabei die Position des Funktionselements 1, wenn dieses vollständig auf die Wischerstange 3 aufgesteckt ist. In dieser Position überdeckt der dritte Teilbereich 24 des Funktionselements 1 das freie Ende 5 der Wischerstange 3 insbesondere - bezogen auf die Einbaulage des Wischerarms 2 - an dessen Vorderseite und an dessen Unterseite. Ferner ist erkennbar, dass die Wischerstange 3 gegenüber dem Teilbereich 24 zurückspringend angeordnet ist.

Anhand einer Zusammenschau der Figuren 2a und 2b mit derjenigen gemäß Fig. 2c ist zudem erkennbar, dass im vorliegenden Fall das Funktionselement 1 mittels einer Befestigungseinrichtung 25 in Erstreckungsrichtung des Aufnahmekanals 12 gesichert an der Wischerstange 3 des Wischerarms 2 angeordnet ist. Die Sicherung erfolgt im vorliegenden Fall mittels einer Lasche 26, welche über ein Filmscharnier 27 schwenkbar an dem Funktionselement 1 angeordnet ist. Wird die Lasche 26 mittels eines Rastelements 28 in eine hierfür vorgesehene Rastaufnahme 29 im Bereich des Aufnahmekanals 12 eingesteckt, so kommt das Rastelement 28 auch mit einer Nut 30 (Fig. 1a) innerhalb der Wischerstange 3 in Eingriff. Hierdurch ergibt sich quasi eine Axialsicherung des Funktionselements 1 an der Wischerstange 3, sodass das Funktionselement 1 nach dem Aufschieben auf die Wischerstange 3 entsprechend lagegesichert ist.

Die Befestigungseinrichtung 25 ist in den Figuren 3a und 3b in einer jeweiligen Schnittansicht der Anordnung des Funktionselements 1 an der Wischerstange 3 nochmals in ihrer Funktionsweise erläutert. Hierbei ist insbesondere erkennbar, wie sich die axiale Sicherung des Rastelements 28 auf Seiten der Lasche 26 innerhalb der Rastaufnahme 29 bzw. an der Nut 30 der Wischerstange 3 ergibt.

Aus den Figuren 3a und 3b wird anhand der unterschiedlichen Schraffuren außerdem deutlich, dass das Funktionselement 1 vorliegend als Kunststoffteil in einem Zweikomponenten-Verfahren, beispielsweise einem Zweikomponenten-Spritzgussverfahren, hergestellt ist. Insbesondere ist hierbei erkennbar, dass der Aufnahmekanal 12 im Bereich der Befestigungseinrichtung 25 durch eine Hartkomponente 31 gebildet ist. Ebenso sind die jeweiligen - die Reinigungsflüssigkeit führenden Kanäle im zweiten und dritten Teilbereich 11, 24 des Funktionselements 1 aus dieser Hartkomponente 31 - zumindest im Bereich der jeweiligen Düsen 17, 18, 19, 21 gebildet. Dazwischen können auch Teile durch eine Weichkomponente 32 des Kunststoffs gebildet werden, welche im Übrigen auch - wie bereits erläutert - den ersten Teilbereich 10 und den Leitungsteil 14 bilden. Durch die Weichkomponente 32 ist auch - wie dies aus den Figuren 3a und 3b erkennbar ist - die Windabweiserkontur 23 des Funktionselements 1 ausgebildet. Die Komponenten 31, 32 sind dabei insbesondere UV-beständig ausgebildet, um entsprechend dauerhaft haltbar zu sein.

In den Figuren 4a und 4b ist in einer jeweiligen Perspektivansicht eine alternative Ausführungsform des Funktionselements 1 dargestellt. Dieses Funktionselement 1 ist in seiner Ausgestaltung und Funktion im Wesentlichen identisch mit demjenigen gemäß dem ersten beschriebenen Ausführungsbeispiel, sodass im Weiteren nur auf die Unterschiede eingegangen werden soll. Im Wesentlichen unterscheidet sich dieses Funktionselement 1 dadurch, dass bei diesem der erste Teilbereich 10 des Funktionselements 1, welcher sich zwischen dem zweiten Teilbereich 11 und dem Anschlussbereich 7 des Federkastens 6 erstreckt, hier nicht vorgesehen ist. Vielmehr endet das Funktionselement 1 mit einem Ende 33 in einem Abstand vor dem Knickbereich 4 und demzufolge in einem erheblichen Abstand vor dem Anschlussbereich 7 des Federkastens 6. Das Leitungsteil 14 des Funktionselements 1 erstreckt sich demzufolge über eine erhebliche Länge ohne zusätzliche Ummantelung der Wischerstange 3 unterhalb bzw. innenseitig von dieser bis in den Federkasten 6 hinein, von wo aus die weitere Verbindung zur Versorgung mit der Reinigungsflüssigkeit erfolgt.

Je nachdem, wie kurz das Funktionselement 1 ausgebildet ist, kann gegebenenfalls bei einigen Ausführungsformen auf eine oder mehrere jeweilige Innenkreisdüsen 21 verzichtet werden. Eine solche Ausgestaltung ergibt sich beispielsweise bei Fahrzeugen der Kompaktklasse, bei welchen eine relativ geringe Scheibenfläche gewischt beziehungsweise gereinigt werden braucht. Auch auf einer jeweiligen Beifahrerseite einer größeren Scheibe bietet sich gegebenenfalls ein derartiges Konzept an. Im Übrigen weist die in das Funktionselement 1 integrierte Scheibenreinigungseinrichtung 16 eine zu der bereits im Zusammenhang mit den Figuren 1a bis 3b beschriebenen Ausführungsform zumindest im Wesentlichen identische Ausgestaltung auf. Allerdings können - je nach Länge des Funktionselements 1 bzw. insbesondere der Teilbereiche 11 und 24 - eine geringere Anzahl von mittleren Düsen 19 vorgesehen sein. Auch im vorliegenden Ausführungsbeispiel ist wiederum das Rastelement 28 erkennbar, mittels welchem das Funktionselement 1 nach dem Aufstecken auf die Wischerstange 3 gesichert werden kann.

In den Figuren 5a und 5b ist schließlich in einer jeweiligen Perspektivansicht die Montage eines Wischerblatts 34 an dem korrespondierenden freien Ende 5 der Wischerstange 3, welches aus dem Aufnahmekanal 12 des Funktionselements 1 herausragt, dargestellt. Das Wischerblatt 34 umfasst dabei ein Wischerblattelement 35, an welchem ein Grundkörper in Form eines Reiters 36 befestigt ist. Dieser Reiter 36 ist wiederum gelenkig mit einem Adapter 37 verbunden, sodass das Wischerblattelement 35 mit dem Reiter 36 relativ zu dem Adapter 37 in gewissen Grenzen verschwenkt werden kann. Der Adapter 37 umfasst eine im vorliegenden Fall zumindest teilweise offen ausgebildete Aufnahme 38, über welche der Adapter 37 bzw. somit das gesamte Wischerblatt 34 am freien Ende 5 der Wischerstange 3 aufgesteckt werden kann. Hierzu ist die Aufnahme 38, welche als eine Art Steckaufnahme ausgebildet ist, in ihrem Querschnitt bzw. in ihrer Form auf den Querschnitt der Wischerstange 3 abgestimmt. Nachdem der Adapter 37 mit der Aufnahme 38 über einen bestimmten Längenbereich auf das freie Ende 5 der Wischerstange 3 aufgesteckt ist, kommt eine Rasteinrichtung 39 in Eingriff, welche sowohl auf Seiten des Adapters 37 als auch auf Seiten der Wischerstange 3 ein entsprechendes Rastelement umfasst. Diese Rasteinrichtung 39 kann beispielsweise auf Seiten des Adapters 37 einen Rastzapfen oder dergleichen umfassen, welcher mit einer Rastvertiefung auf Seiten des freien Endes 5 der Wischerstange 3 in Eingriff kommt. Die Rasteinrichtung 39 ist dabei mittels eines Betätigungselements 40 in Form eines Druckknopfs oder dergleichen lösbar, welcher im vorliegenden Fall in Richtung des Wischerblattelements 39 gedrückt werden muss.

In seiner verrasteten Position durchragt dieses Betätigungselement 40 eine Durchgangsöffnung 42 innerhalb des Teilbereichs 24 des Funktionselements 1. In der verrasteten Position der Rasteinrichtung 39 ist somit das Betätigungselement 40 zumindest im Wesentlichen innerhalb dieser Durchgangsöffnung 41 angeordnet und kann demzufolge von vorne außen betätigt werden, um das Wischerblatt 34 vom freien Ende 5 der Wischerstange 3 abzunehmen.

Da somit das Funktionselement 1 in einem vom freien Ende 5 beabstandeten Längenbereich der Wischerstange 3 an dieser befestigt ist und der Adapter 37 des Wischerblatts 34 am freien Ende 5 der Wischerstange befestigt ist, ergibt sich für das Funktionselement 1 und das Wischerblatt 34 eine vollkommen unabhängige jeweilige Anordnung und Fixierung an der Wischerstange 3. Dies hat den Vorteil, dass das Wischerblatt 34 vollkommen unabhängig von dem Funktionselement 1 abgenommen und beispielsweise von Zeit zu Zeit ausgetauscht werden kann, ohne dass dies Einfluss auf die Funktionsweise des Funktionselements 1 hat. Insbesondere ist dabei zu berücksichtigen, dass sowohl die Windabweisfunktion als auch die Scheibenreinigungsfunktion des Funktionselements 1 vollkommen erhalten bleibt, auch wenn der Adapter 37 abgenommen wird, das Funktionselement 1 jedoch an der Wischerstange 3 verbleibt. Im Unterschied zu anderen Systemen wird somit mit dem Austausch des Wischerblatts 34 nicht ein Teil der Windabweiseinrichtung oder der Scheibenreinigungseinrichtung mitabgenommen und beispielsweise entsorgt, was entsprechende finanzielle und hinsichtlich der Nachhaltigkeit entstehende Probleme aufwirft. Vielmehr ist somit ein System geschaffen, bei welchem die Anbindung des Wischerblatts 34 und die Anbindung des Funktionselements 1 sowie die Durchführung der durch das Funktionselement 1 bewerkstelligten Funktionen völlig autark voneinander sind.

Im Funktionselement 1 können darüber hinaus weitere Elemente integriert sein. Insbesondere kann auch eine Heizung für die Scheibenreinigungseinrichtung mitintegriert sein. Auch hier ergeben sich die bereits im Zusammenhang mit der Scheibenreinigungseinrichtung beschriebenen Vorteile.

In den Figuren 6a und 6b ist in einer jeweiligen Perspektivansicht eine weitere, alternative Ausführungsform des Funktionselements 1 dargestellt. Auch dieses Funktionselement 1 ist in seiner Ausgestaltung und Funktion im Wesentlichen identisch mit demjenigen gemäß dem ersten beschriebenen Ausführungsbeispiel, sodass im Weiteren nur auf Unterschieden eingegangen werden soll. Im Wesentlichen unterscheidet sich dieses Funktionselement 1 dadurch, dass es aus zwei Teilen 42, 43 zusammengesetzt ist, welche nach Art eines Filmscharniers in einem Bereich 44 einteilig miteinander verbunden sind. Gegebenenfalls wäre hier auch eine vollständig zweiteilige Variante denkbar.

In Zusammenschau mit den Figuren 8a bis 8c, welche eine jeweilige Querschnittansicht durch das Funktionselement 1 bzw. die Wischerstange 3 zeigen, wird dabei ersichtlich, in welcher Weise die Anordnung und Fixierung der beiden Teile 42, 43 bzw. des Funktionselements 1 insgesamt an der Wischerstange 3 erfolgt. Gemäß den Figuren 6a bzw. 8a wird dabei das Funktionselement 1 bei geöffneten Teilen 42, 43 auf die Wischerstange 3 aufgeschoben und/oder aufgesteckt bis die Wischerstange 3 - wie dies insbesondere aus Fig. 8b erkennbar ist - in ihrem vorgesehenen Aufnahmekanal 12, welcher analog zu den Aufnahmekanälen 12 gemäß den ersten beiden Ausführungsformen ausgebildet ist, angeordnet ist. Im Anschluss daran können die beiden Teile 42, 43 dann um die durch das Filmscharnier 44 oder dergleichen gebildete Achse gegeneinander verschwenkt werden, bis im vorliegenden Fall die Teile 42, 43 mittels der Befestigungseinrichtung 45 auf der dem Filmscharnier 44 abgewandten Seite miteinander verbunden werden. Die Befestigungseinrichtung 45 umfasst hierbei am einen Teil 43 ein oder mehrere Rastelemente 46, welche - wie dies insbesondere aus Fig. 8c ersichtlich ist - mit jeweils einer oder mehreren korrespondierenden Rastaufnahmen 47 in Eingriff kommen.

An beiden Teilen 42, 43 ist außerdem eine jeweilige Sicherungsnase 48, 49 angeordnet, welche - wie dies aus Fig. 7 erkennbar ist - mit einer Nut 50 in der Wischerstange 3 in Eingriff kommen. Die Sicherungsnasen 48, 49 wirken in ihrem Zusammenspiel mit der Nut 50 somit als Axialsicherung der Befestigungseinrichtung 45, um eine Verschieben des Funktionselements 1 in Erstreckungsrichtung der Wischerstange 3 zu vermeiden.

Die geteilte Ausführung dieses Funktionselements 1 mit den Teilen 42 und 43 bietet somit den Vorteil, dass das Funktionselement 1 auf einfache Weise an der Wischerstange 3 fixiert werden kann, auch wenn die Wischerstange 3 beispielsweise einen nicht geradlinigen Verlauf bzw. einen Knickbereich 4 aufweist. Das Funktionselement 1 kann sich dabei sowohl bis an den Federkasten 6 bzw. an dessen Anschlussbereich 7 erstrecken als auch in einem Abstand zu diesem Anschlussbereich 7 enden.

Insbesondere aus den Figuren 8a bis 8c ist außerdem erkennbar, dass - wie bei den vorangegangenen Ausführungsbeispielen - das Funktionselement 1 teilweise aus einer elastischen Kunststoffkomponente 51 und teilweise aus einer harten Kunststoffkomponente 52 gebildet ist. Die Aufnahme bzw. der Aufnahmekanal 12 sind im vorliegenden Fall zumindest im Teilbereich 11, jedoch beispielsweise auch im Teilbereich 10, aus der harten Kunststoffkomponente 52 gebildet, um somit eine besonders feste und sichere Anordnung des Funktionselements 1 an der Wischerstange 3 zu erhalten.

Außerdem sind im vorliegenden Fall zumindest im Wesentlichen wiederum alle Flüssigkeit führenden Bauteile der Scheibenreinigungseinrichtung 16, also beispielsweise der Versorgungskanal 15 sowie die jeweiligen Düsen 17, 18, 19, 21 aus der harten Kunststoffkomponente 52 gebildet. Die die Reinigungsflüssigkeit führenden Bauteile der Scheibenreinigungseinrichtung 16 sind somit besonders formstabil und dicht ausgeführt.

Die Scheibenreinigungseinrichtung 16 ist dabei allerdings - wie dies insbesondere aus den Figuren 8a bis 8c erkennbar ist - zumindest im Wesentlichen vollständig in die elastische Kunststoffkomponente 51 integriert.

Insbesondere ist - bezogen auf die Einbauposition des Funktionselements 1 beziehungsweise des Windabweisers 22 - eine Oberfläche 53 auf seiner Sichtseite zumindest im Wesentlichen vollständig durch die elastische Kunststoffkomponente 51 gebildet. Hierdurch ergibt sich eine optisch besonders günstige Anmutung und überdies ein Funktionselement 1, welches besonders gut vor Schlägen, Stößen oder dergleichen geschützt ist. Die elastische Kunststoffkomponente 51 ist dabei vorzugsweise aus einem UV-beständigen Material gebildet, um entsprechend langlebig zu sein. Zudem weist die elastische Kunststoffkomponente 51 Höckern 54 auf, welche beispielsweise als Dämpfer dienen, um das Funktionselement 1 beziehungsweise den Windabweiser 22 sowie die Oberfläche der zu reinigenden Scheibe zu schützen.

Bei dem Zweikomponenten-Spritzgussverfahren zum Herstellen des Funktionselements beziehungsweide des Windabweisern wird zunächst ein Kern zur Ausbildung des Versorgungskanals 15 in dem entsprechenden Werkzeug vorgesehen, welcher von der harten Kunststoffkomponente 52 umspritzt wird. Da der Kern infolge der dünnen Ausgestaltung des Versorgungskanals 15 jedoch einen relativ geringen Querschnitt von beispielsweise 2 bis 3 mm aufweist und demgegenüber verhältnismäßig lang ist, droht prinzipiell die Gefahr, dass der Kern infolge des Spritzdrucks beim Einbringen der harten Kunststoffkomponente 52 in das Werkzeug verschwimmt beziehungsweise verlagert wird. Aus diesem Grund wird der Kern in einem oder mehreren mittleren Bereichen des Versorgungskanals 15 mittels von Schiebern an Ort und Stelle gehalten, um das beschriebe Problem zu vermeiden. Allerdings ist hierdurch der Versorgungskanal 15 zunächst unterbrochen. Beim anschließenden Umspritzen der harten Kunststoffkomponente 52 durch die weiche und elastische Kunststoffkomponente 51 werden diese Lücken durch die elastische Kunststoffkomponente 51 ausgefüllt. Dies ist in einem mittleren Bereich des Versorgungskanals 15 unkritisch. Die wesentlichen Stellen wie Kupplungen, Auslassbereich der Düsen 17, 18, 19 und 21, bei welchen es auf eine scharfkantige Kontur ankommt, sind hingegen aus der harten Kunststoffkomponente 52 gebildet.

Insgesamt ist somit erkennbar, dass vorliegend ein Funktionselement 1 beziehungsweise ein Windabweiser 22 geschaffen ist, welcher durch die zumindest teilweise Gestaltung aus einer elastischen Kunststoffkomponente einerseits besonders günstig an dem insbesondere als Wischerstange 3 ausgebildeten Bauelement des Wischerarms 2 befestigt werden kann, und welcher andererseits beispielsweise günstige aerodynamische Eigenschaften aufweist und überdies bei einem Kontakt mit der zu wischenden Scheibe keine Beschädigungen oder störende Geräusche verursacht.

## Patentansprüche

1. Windabweiser (22) für eine Scheibenwischanlage eines Kraftwagens, mit einer Aufnahme (12) zum Befestigen des Windabweisers (22) an einem Bauelement (3) eines Wischerarms (2) der Scheibenwischanlage, wobei
der Windabweiser (22) zumindest teilweise aus einer elastischen Kunststoffkomponente (51) gebildet ist, der Windabweiser (22) zumindest teilweise aus einer harten Kunststoffkomponente (52) gebildet ist, wobei in den Windabweiser (22) eine Scheibenreinigungseinrichtung (16) integriert ist, wobei
zumindest im Wesentlichen alle Flüssigkeit führenden Bauteile der Scheibenreinigungseinrichtung (16) aus der harten Kunststoffkomponente (52) gebildet sind,
**dadurch gekennzeichnet, dass**
eine Oberfläche (53) des Windabweisers (22) bezogen auf seine Einbauposition zumindest auf seiner Sichtseite zumindest im Wesentlichen vollständig durch die elastischen Kunststoffkomponente (51) gebildet ist.

2. Windabweiser (22) nach Anspruch 1,
**dadurch gekennzeichnet, dass**
die Scheibenreinigungseinrichtung zumindest im Wesentlichen vollständig in die elastische Kunststoffkomponente (51) integriert ist.

3. Windabweiser (22) nach einem der vorhergehenden Ansprüche,
**dadurch gekennzeichnet, dass**
die Aufnahme (12) zum Befestigen des Windabweisers (22) an einem Bauelement (3) des Wischerarms (2) der Scheibenwischanlage zumindest bereichsweise aus der harten Kunststoffkomponente (52) gebildet ist.

4. Windabweiser (22) nach einem der vorhergehenden Ansprüche,
**dadurch gekennzeichnet, dass**
die Aufnahme (12) zum Befestigen des Windabweisers (22) an einer Wischerstange (3) des Wischerarms (2) der Scheibenwischanlage ausgebildet ist.

5. Windabweiser (22) nach einem der vorhergehenden Ansprüche, **dadurch gekennzeichnet, dass**
eine Befestigungseinrichtung (45) zur Sicherung des Windabweisers (22) an dem Bauelement (3) des Wischerarms (2) der Scheibenwischanlage vorgesehen ist, welches aus der harten Kunststoffkomponente (52) gebildet ist.

6. Windabweiser (22) nach einem der vorhergehenden Ansprüche, **dadurch gekennzeichnet, dass**
die elastische Kunststoffkomponente (51) aus einem UV-beständigen Material gebildet ist.

## Claims

1. A wind deflector (22) for a windscreen wiper system of a motor vehicle, with a receptacle (12) for attaching the wind deflector (22) to a component (3) of a wiper arm (2) of the windscreen wiper system, wherein
the wind deflector (22) is at least partially formed of an elastic plastic component (51), the wind deflector (22) is at least partially formed of a hard plastic component (52), wherein a windscreen cleaning device (16) is integrated in the wind deflector (22), wherein
at least substantially all of the liquid-carrying components of the windscreen cleaning device (16) are formed of the hard plastic component (52), **characterized in that**
a surface (53) of the wind deflector (22) related to its installation position is at least substantially completely formed by the elastic plastic component (51) at least on its visible side.

2. The wind deflector (22) according to claim 1,
**characterized in that**
the windscreen cleaning device is at least substantially completely integrated in the elastic plastic component (51).

3. The wind deflector (22) according to any one of the preceding claims, **characterized in that**
the receptacle (12) for attaching the wind deflector (22) to a component (3) of the wiper arm (2) of the windscreen wiper system is formed of the hard plastic component (52) at least in certain areas.

4. The wind deflector (22) according to any one of the preceding claims, **characterized in that**
the receptacle (12) is formed for attaching the wind deflector (22) to a wiper rod (3) of the wiper arm (2) of the windscreen wiper system.

5. The wind deflector (22) according to any one of the preceding claims, **characterized in that**
an attachment device (45) is provided for securing the wind deflector (22) to the component (3) of the wiper arm (2) of the windscreen wiper system, which is formed of the hard plastic component (52).

6. The wind deflector (22) according to any one of the preceding claims, **characterized in that**
the elastic plastic component (51) is formed of a UV-resistant material.

## Revendications

1. Déflecteur de vent (22) pour un système d'essuie-glace d'un véhicule automobile, comportant un logement (12) pour fixer le déflecteur de vent (22) à un composant (3) d'un bras d'essuie-glace (2) du système d'essuie-glace,
le déflecteur de vent (22) étant au moins partiellement formé d'un composant en matière plastique élastique (51), le déflecteur de vent (22) étant au moins partiellement formé d'un composant en matière plastique dure (52), un dispositif de nettoyage de vitre (16) étant intégré dans le déflecteur de vent (22),
au moins pratiquement tous les composants du dispositif de nettoyage de vitre (16) transportant du liquide étant formés du composant en matière plastique dure (52), **caractérisé en ce que**
la quasi-totalité d'une surface (53) du déflecteur de vent (22), par rapport à sa position de montage, est formée par le composant en matière plastique élastique (51), au moins sur son côté visible.

2. Déflecteur de vent (22) selon la revendication 1,
**caractérisé en ce que**
la quasi-totalité du dispositif de nettoyage de vitre est intégrée dans le composant en matière plastique élastique (51).

3. Déflecteur de vent (22) selon l'une des revendications précédentes, **caractérisé en ce que**
le logement (12) destiné à fixer le déflecteur d'air (22) à un composant (3) du bras d'essuie-glace (2) du système d'essuie-glace est formé du composant en matière plastique dure (52), au moins dans certaines zones.

4. Déflecteur de vent (22) selon l'une des revendications précédentes, **caractérisé en ce que**
le logement (12) est conçu pour fixer le déflecteur de vent (22) à une tige d'essuie-glace (3) du bras d'essuie-glace (2) du système d'essuie-glace.

5. Déflecteur de vent (22) selon l'une des revendications précédentes, **caractérisé en ce que**
un dispositif de fixation (45) est prévu pour fixer le déflecteur de vent (22) au composant (3) du bras d'essuie-glace (2) du système d'essuie-glace, qui est formé du composant en matière plastique dure (52).

6. Déflecteur de vent (22) selon l'une des revendications précédentes, **caractérisé en ce que**
le composant en matière plastique élastique (51) est formé d'un matériau résistant aux UV.
